# FASCICULE DE BREVET EUROPEEN

(11) **EP 0 776 754 B1**
(45) Date de publication et mention de la délivrance du brevet: **22.08.2001**
(21) Numéro de dépôt: 96420341.8
(22) Date de dépôt: 28.11.1996
(51) Int. Cl.: B29C 70/08, B29C 70/34

(54) **Méthode et dispositif de moulage par injection et pièce en matière composite obtenue par cette méthode**
Verfahren und Vorrichtung zum Spritzgiessen und damit hergestellter Verbundwerkstoff
Process and apparatus for injection moulding and composite material produced thereby

(30) Priorité: 30.11.1995 FR 9514453
(43) Date de publication de la demande: 04.06.1997
(73) Titulaire: Inoplast, 07340 Saint Desirat (FR)
(72) Inventeur: Fare, Jean-Claude, 26140 Anneyron (FR); Quinon, Gérard, 38550 Peage de Roussillon (FR)
(74) Mandataire: Myon, Gérard Jean-Pierre

(56) Documents cités:
- EP-A- 0 423 676
- EP-A- 0 442 255
- EP-A- 0 577 505
- GB-A- 775 816
- GB-A- 788 517
- US-A- 3 096 958
- US-A- 4 883 623
- DATABASE WPI Week 8046 Derwent Publications Ltd., London, GB; AN 80-81471C XP002010340 & JP 55 126 432 A (OLYMPIC TSURIGU K.K.) , 1 Octobre 1980

## Description

La présente invention a trait au moulage des matières dites composites, c'est-à-dire constituées par un mélange convenablement dosé d'une résine thermodurcissable ou polymérisable, de fibres de renfort et de charges appropriées.

Les fibres de renfort peuvent être en verre, en carbone ou en toute autre matière présentant des caractéristiques mécaniques adaptées. La résine est généralement formée d'un matériau thermodurcissable tel que du polyéthyléne.

La matière composite utilisée lors des opérations du moulage peut se présenter sous différentes formes. Il peut s'agir d'un composé de moulage en feuille (SHEET MOLD COMPOUND ou SMC) qui permet d'obtenir des pièces d'une grande rigidité essentiellement par compression du composé en feuille. Cependant, le composé de moulage en feuille ou SMC confère aux pièces un aspect rugueux qui n'est pas toujours compatible avec l'usage ultérieur de La pièce, par exemple avec son utilisation en tant qu'élément de carrosserie d'un véhicule automobile. De plus, la densité d'un composé de moulage en feuille est telle que les pièces obtenues sont lourdes lorsque Leurs dimensions deviennent importantes.

D'autre part, on connaît la matière composite de moulage présentée sous forme composée de moulage en vrac (BULK MOLD COMPOUND ou BMC). Ce type de composé est moulé par injection dans un moule fermé, ce qui permet d'obtenir des pièces d'un aspect satisfaisant alors que le temps de cycle peut être relativement court grâce à la facilité d'automatisation des procédés avec une telle matière. IL est par exemple possible d'utiliser un dispositif tel que ceux qui sont connus des demandes de brevet FR-2 629 388 et/ou 2 697 773.

Or, les pièces obtenues par injection et moulage de composé de moulage en vrac (BMC) n'ont pas toujours La rigidité suffisante pour la fonction à laquelle elles sont destinées, en particulier s'il s'agit de pièces de dimensions relativement importantes.

Ainsi, par exemple, les parties ouvrantes des carrosseries de véhicules automobiles telles que les portes, le hayon arrière ou le capot d'une carrosserie doivent être renforcées d'une pièce de rigidification, par exemple collée sur la pièce. Ceci nécessite des opérations complexes dont certaines ne-peuvent être réalisées que manuellement, ce qui majore d'autant les coûts de fabrication des pièces en question.

US-A-3,096,958 décrit une structure en matière plastique comprenant une nervure ajoutée sur un panneau préalablement formé par polymérisation. La nervure interagit avec une faible partie de la surface du panneau. JP-A-55 126 432 enseigne d'utiliser des matériaux de moulage avec des longueurs de fibres différentes. Les produits connus de ces documents ne sont pas nécessairement rigides.

C'est à ce problème de manque de rigidité des pièces en matière composite réalisées par injection de composés de moulage en vrac que s'est attachée la présente invention.

Elle concerne une méthode de moulage d'une pièce en matière composite comprenant des fibres de renfort réparties dans une résine thermodurcissable, par injection d'un composé de moulage en vrac dans un moule clos dans lequel a été préalablement déposée une armature réalisée en composé de moulage en feuille (SMC), caractérisée en ce qu'on injecte ledit composé de moulage en vrac (BMC) autour de l'armature de sorte qu'il comprime ladite armature lors de son thermodurcissage.

Grâce à L'invention, on obtient une pièce dont L'aspect extérieur est aussi satisfaisant que celui des pièces obtenues par injection cLassique d'un composé de moulage en vrac, alors que La rigidité qui lui est conférée par l'armature en composé de moulage en feuille permet de réaliser des pièces de dimensions importantes sans risque de déformation lors de Leur utilisation. Il est à noter que La compression du composé du moulage en feuille par le composé de moulage en vrac permet l'accrochage intime des deux matières lors de l'opération de moulage, ce qui contribue encore à La rigidité de l'ensemble.

Selon une forme de mise en oeuvre avantageuse de L'invention, Le composé de moulage en vrac est injecté dans Le moule par au moins deux injecteurs répartis à sa surface ; ceci permet de garantir une bonne répartition du composé de moulage en vrac à L'intérieur du moule et en particulier autour de l'armature.

L'invention concerne aussi une pièce en matière plastique composite moulée comportant des fibres de renfort réparties dans une matrice comprenant un enrobage, réalisé à partir d'un composé de moulage en vrac, caractérisée en ce qu'elle comprend une armature, réalisée à partir d'un composé d'un moulage en feuille comprimée par injection d'un composé de moulage en vrac autour de ladite armature et thermodurcissage de ce composé. Cette pièce présente de bonnes propriétés de résistance mécanique et de rigidité alors que son aspect permet son utilisation sur les parties visibles d'une carrosserie de véhicule automobile. Cette pièce est donc relativement légère, alors qu'elle a d'excellentes propriétés mécaniques.

L'invention concerne enfin un dispositif de moulage permettant de mettre en oeuvre la méthode de l'invention et d'obtenir des pièces conformes à l'invention. Il s'agit d'un dispositif par injection d'une pièce en matière composite comprenant des fibres de renfort réparties dans une résine, ledit dispositif comprenant un moule, au moins un injecteur de composé de moulage en vrac (BMC) et au moins un moyen d'ouverture dudit moule, lors de chaque opération de moulage, ladite ouverture étant suffisante pour permettre l'introduction dans ledit moule d'une armature, caractérisé en ce qu'il comprend au moins un dévidoir de composé de moulage en feuille (SMC) disposé à proximité dudit moule, ladite armature pouvant être introduite dans ledit moule après avoir été prélevée sur ledit dévidoir, et en ce que le moule comprend un élément de maintien en position de l'armature lors de l'injection de composé de moulage en vrac.

Selon une forme de réalisation avantageuse de l'invention, le dispositif de moulage comprend un moyen de pose automatisé de l'armature à l'intérieur du moule, ce moyen pouvant être constitué par un robot multi-axe.

L'invention sera mieux comprise et d'autres avantages de celle-ci apparaîtront plus clairement à la Lumière de la description qui va suivre d'un mode de réalisation d'un dispositif de moulage par injection conforme à son principe, donnée uniquement à titre d'exemple et faite en référence aux dessins annexés dans lesquels :
- La figure 1 est un schéma de principe en coupe d'une presse à injecter comportant application de l'invention et
- La figure 2 est une vue en plan selon le plan II-II de la figure 1.

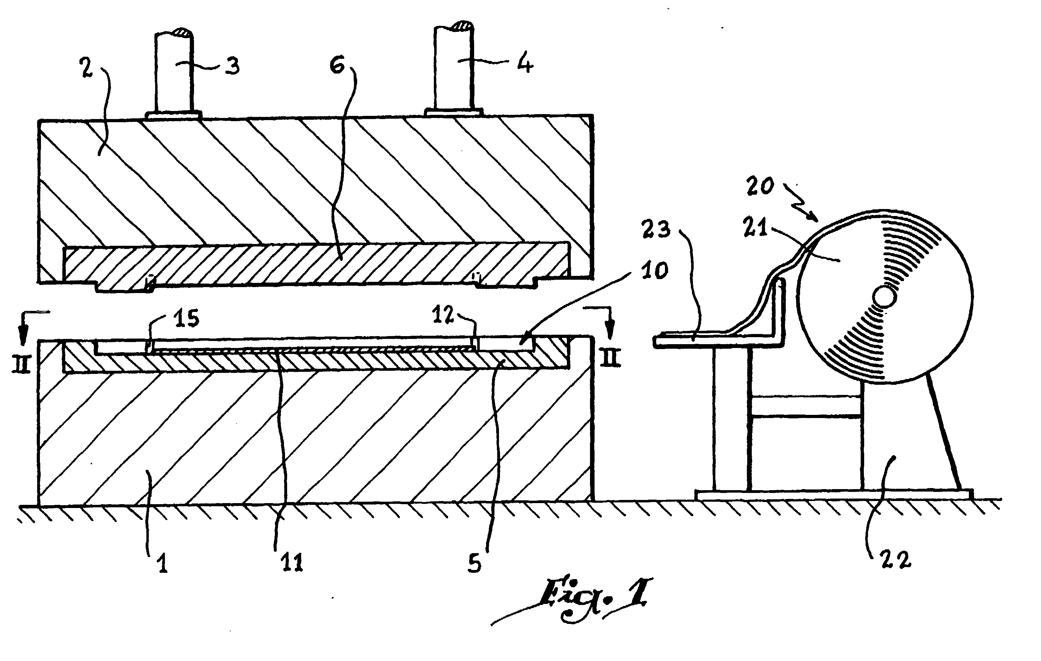

La presse de la figure 1 comprend essentiellement un bâti fixe 1, fixé au sol et un plateau 2 déplacé verticalement au-dessus du bâti 1 par deux vérins 3 et 4. Le bâti 1 porte une matrice 5, ou moule femelle, destiné à coopérer avec un poinçon 6, ou moule mâle, pour définir la forme des pièces à mouler.

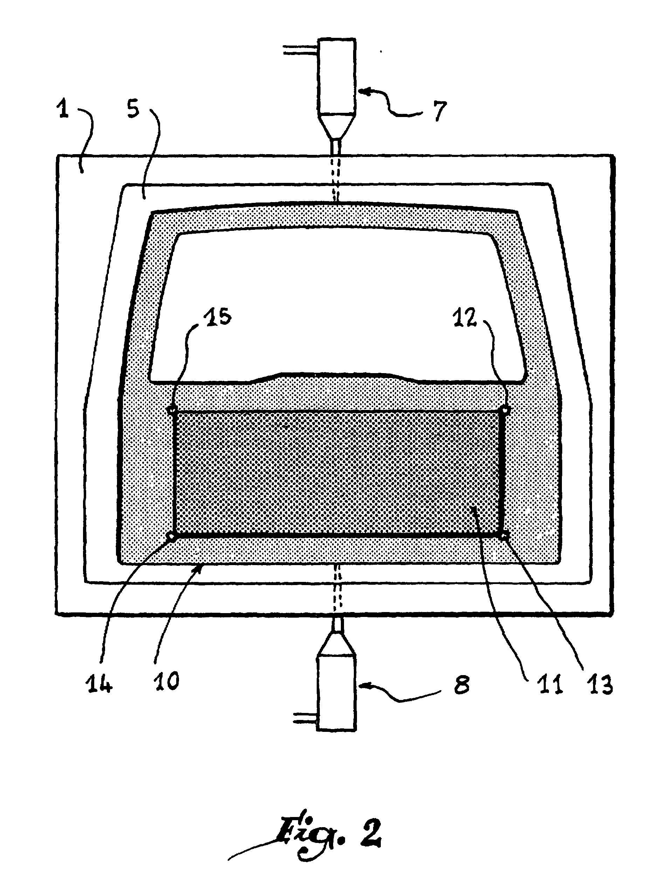

Ainsi qu'il apparaît plus clairement à la figure 2, l'intérieur de la matrice 5, qui définit la forme d'un hayon arrière de véhicule automobile, est alimenté en composé de moulage en vrac par deux injecteurs 7 et 8 dont les orifices de déversement dans le moule sont répartis à la surface du moule. Ces deux injecteurs peuvent être conformes à l'enseignement technique de FR-A-2 697 773 ou a tout autre système connu. Un logement 10 est prévu dans lequel peut être déposée une armature 11 en composé de moulage en feuille.

Selon une forme de réalisation de L'invention, on peut prévoir que des pions de centrage 12, 13, 14 et 15 maintiennent l'armature 11 dans son logement 10, au cours de l'opération de moulage. Ces pions de centrages sont alors escamotables afin de ne pas laisser de trace sur la pièce moulée. En outre, on a trouvé que, dans certains cas au moins, il n'est pas nécessaire de prévoir des pions de centrage car l'armature 11 est maintenue en position par la géométrie même du moule.

Un dévidoir 20 de composé de moulage en feuille est disposé à proximité de la presse. Il se compose essentiellement d'un rouleau 21 de composé de moulage en feuille porté par une structure 22 formée de deux portiques et devant lequel est disposée une table de découpe 23. Un opérateur peut préparer une armature sur la table 23 et la déposer dans le logement 10 lorsque le plateau 2 est en position haute.

Dans une variante non représentée de l'invention, un robot multi-axe est situé au voisinage de la presse. Il peut s'agir du robot qui extrait les pièces du moule une fois l'opération de moulage effectuée. Ce robot est capable de prendre une armature 11 de composé de moulage en feuille sur la table de découpe 23 et de la poser dans le logement 10, éventuellement en se servant d'un des pions 12 à 15 comme moyen de guidage.

Le fonctionnement est le suivant :

Au début de l'opération de moulage, le plateau supérieur 2 est au point mort haut de sa course sous l'effet de l'action des vérins 3 et 4. On dépose alors dans la matrice 5, manuellement ou grâce à un moyen de pose automatisé, une armature en composé de moulage en feuille. Par composé de moulage en feuille (SMC), on entend tout composé de moulage se présentant sous la forme d'une bande, d'un tissu, tissé ou non, d'un mat, uni ou bi-directionnel, ou tout autre structure équivalente. Cette armature a sensiblement les dimensions de la partie de la pièce dans laquelle une rigidité particulière est recherchée.

Le moule constitué de la matrice 5 et du poinçon 6 est ensuite clos, puis on injecte à l'intérieur de ce moule, autour de l'armature 11, un volume de composé de moulage en vrac au moyen des deux injecteurs 7 et 8. Le composé de moulage en vrac est injecté dans le moule avec une pression comprise entre 150 et 450 bars et de préférence entre 250 et 300 bars, de telle sorte qu'il est apte à comprimer le composé de moulage en feuille formant l'armature 11. Le moule et son contenu sont maintenus à une température comprise entre 100 et 200°C, de préférence entre 150 et 160°C lors de la compression. Cette compression du composé de moulage en feuille par le composé de moulage en vrac permet d'obtenir un accrochage intime entre les deux matières, ce qui garantit la bonne rigidité de la pièce ainsi obtenue. En outre, comme Le moule et son contenu sont maintenus à température relativement élevée au cours de l'opération de moulage, la résine thermodurcissable constituant la matière acquiert sa forme et sa rigidité définitive.

Grâce à l'invention, les pièces obtenues présentent un gain de rigidité important par rapport aux pièces uniquement élaborées avec un composé de moulage en vrac. De plus, le temps de cycle de l'opération de moulage n'est pas augmenté par rapport à une opération de moulage de SMC classique.

Les fibres de renfort utilisées peuvent être en verre, auquel cas la matrice est une résine polyester, vinylester ou phénolique. Elles peuvent aussi être en carbone, auquel cas la résine peut être époxyde. Bien entendu, toute variation de la nature des fibres de renfort et/ou de la résine est comprise dans la présente invention.

## Revendications

1. Méthode de moulage d'une pièce en matière composite comprenant des fibres de renfort réparties dans une résine thermodurcissable, par injection d'un composé de moulage en vrac dans un moule (5, 6) clos dans lequel a été préalablement déposée une armature (11) réalisée en composé de moulage en feuille (SMC), caractérisée en ce qu'on injecte ledit composé de moulage en vrac (BMC) autour de ladite armature, de sorte qu'il comprime ladite armature lors de son thermodurcissage.

2. Méthode de Moulage par injection selon la revendication 1, caractérisée en ce que ledit composé de moulage en vrac (BMC) est injecté dans ledit moule avec une pression comprise entre 150 et 450 bars, de préférence entre 250 et 300 bars.

3. Méthode de moulage par injection selon la revendication 1, caractérisée en ce que ledit moule est maintenu à une température comprise entre 100 et 200°C, de préférence entre 150 et 160°C.

4. Méthode de moulage par injection selon l'une des revendications précédentes, caractérisée en ce que ledit composé de moulage en vrac (BMC) est injecté dans ledit moule par au moins deux injecteurs (7, 8).

5. Pièce en matière plastique composite moulée comportant des fibres de renfort réparties dans une matrice comprenant un enrobage, réalisé à partir d'un composé de moulage en vrac (BMC), caractérisée en ce qu'elle comprend une armature (11), réalisée à partir d'un composé de moulage en feuille (SMC) et comprimée par injection du composé de moulage en vrac autour de ladite armature et thermodurcissage de ce composé.

6. Dispositif de moulage par injection d'une pièce en matière composite comprenant des fibres de renfort réparties dans une résine, ledit dispositif comprenant un moule (5, 6), au moins un injecteur (7, 8) de composé de moulage en vrac (BMC) et au moins un moyen d'ouverture (3, 4) dudit moule, lors de chaque opération de moulage, ladite ouverture étant suffisante pour permettre l'introduction dans ledit moule d'une armature (11), caractérisé en ce qu'il comprend au moins un dévidoir (20) de composé de moulage en feuille (SMC) disposé à proximité dudit moule, ladite armature pouvant être introduite dans ledit moule après avoir été prélevée sur ledit dévidoir et en ce que ledit moule comprend au moins un élément (12, 13, 14, 15) de maintien en position de ladite armature lors de l'injection de composé de moulage en vrac.

7. Dispositif de moulage par injection selon la revendication 6, caractérisé en ce qu'il comprend en outre un moyen de pose automatisé d'une armature (11) en composé de moulage en feuille (SMC) dans ledit moule lorsque ledit moyen d'ouverture (3, 4) maintient ledit moule en position ouverte.

8. Dispositif de moulage par injection selon la revendication 7, caractérisé en ce que ledit moyen de pose est un robot multi-axe.

9. Dispositif de moulage par injection selon l'une quelconque des revendications 6 à 8, caractérisé en ce que ledit dévidoir (20) se compose essentiellement d'un rouleau (21) de composé de moulage en feuille (SMC) devant lequel est disposée une table de découpe (23).

10. Dispositif de moulage par injection selon l'une quelconque des revendications 6 à 9, caractérisé en ce qu'il comprend deux injecteurs (7, 8) dont les orifices de déversement dans le moule (5, 6) sont répartis à la surface dudit moule.

## Patentansprüche

1. Verfahren zum Spritzgießen eines Werkstücks aus Verbundwerkstoff mit in einem thermisch aushärtenden Kunstharz verteilten Verstärkungsfasern durch Einspritzen einer Spritzgußmasse in eine geschlossene Form (5, 6), in die zuvor eine Armierung (11) eingelegt wurde, die in Form eines blattförmigen Formpreßmaterials (SMC) ausgeführt ist, dadurch gekennzeichnet, daß die Spritzgußmasse (BMC) um die Armierung herum eingespritzt wird, so daß sie die Armierung während ihrer thermischen Aushärtung zusammenpreßt.

2. Spritzgußverfahren gemäß Anspruch 1, dadurch gekennzeichnet, daß die Spritzgußmasse (BMC) mit einem zwischen 150 und 450 bar und vorzugsweise zwischen 250 und 300 bar liegenden Druck in die Form eingespritzt wird.

3. Spritzgußverfahren gemäß Anspruch 1, dadurch gekennzeichnet, daß die Form auf einer zwischen 100 und 200 °C und vorzugsweise zwischen 150 und 160 °C liegenden Temperatur gehalten wird.

4. Spritzgußverfahren gemäß einem der vorhergehenden Ansprüche, dadurch gekennzeichnet, daß die Spritzgußmasse (BMC) durch zumindest zwei Injektoren (7, 8) in die Form eingespritzt wird.

5. Werkstück aus spritzgegossenem Kunststoffverbundwerkstoff mit in einer Matrix verteilten Verstärkungsfasern mit einer Ummantelung, die aus einer Spritzgußmasse (BMC) hergestellt ist, dadurch gekennzeichnet, daß es eine Armierung (11) umfaßt, die aus einem blattförmigen Formpreßmaterial (BMC) hergestellt ist und durch Einspritzen der Spritzgußmasse um die Armierung herum und das thermische Aushärten dieser Masse zusammengepreßt wird.

6. Vorrichtung zum Spritzgießen eines Werkstücks aus Verbundwerkstoff, mit in einem Kunstharz verteilten Verstärkungsfasern, wobei die Vorrichtung eine Form (5, 6), zumindest einen Injektor (7, 8) für Spritzgußmasse (BMC) und zumindest ein Mittel (3, 4) zum Öffnen der Form bei jedem Spritzgußvorgang umfaßt, wobei das Öffnen ausreicht, um das Einführen einer Armierung (11) in die Form zu erlauben, dadurch gekennzeichnet, daß sie zumindest eine Haspel (20) für blattförmiges Formpreßmaterial (SMC) umfaßt, die in der Nähe der Form angeordnet ist, wobei die Armierung in die Form eingeführt werden kann, nachdem sie zuvor von der Haspel entnommen wurde, und dadurch, daß die Form zumindest ein Element (12, 13, 14, 15) zum Halten der Armierung in ihrer Position während des Einspritzens der Spritzgußmasse umfaßt.

7. Vorrichtung zum Spritzgießen gemäß Anspruch 6, dadurch gekennzeichnet, daß sie außerdem ein Mittel zum automatischen Einlegen einer Armierung (11) aus blattförmigem Formpreßmaterial (SMC) in die Form umfaßt, wenn das Öffnungsmittel (3, 4) die Form in der geöffneten Stellung hält.

8. Vorrichtung zum Spritzgießen gemäß Anspruch 7, dadurch gekennzeichnet, daß das Positioniermittel ein mehrachsiger Roboter ist.

9. Vorrichtung zum Spritzgießen gemäß einem der vorhergehenden Ansprüche 6 bis 8, dadurch gekennzeichnet, daß die Haspel (20) im wesentlichen aus einer Rolle (21) aus blattförmigem Formpreßmaterial (SMC) besteht, vor der ein Schneidetisch (23) angeordnet ist.

10. Vorrichtung zum Spritzgießen gemäß einem der vorhergehenden Ansprüche 6 bis 9, dadurch gekennzeichnet, daß sie zwei Injektoren (7, 8) umfaßt, deren Entleerungsöffnungen in der Form (5, 6) auf der Oberfläche der Form verteilt sind.

## Claims

1. Method of moulding a part fonned from composite material comprising reinforcing fibres distributed in a thermosetting resin, by injecting a bulk mould compound into a closed mould (5, 6), in which has been previously placed a framework (11) formed from sheet mould compound (SMC), characterised in that said bulk mould compound (BMC) is injected around said framework, so that it compresses said framework during its thermosetting.

2. Injection moulding method according to claim 1, characterised in that said bulk mould compound (BMC) is injected into said mould at a pressure of between 150 and 450 bars, preferably between 250 and 300 bars.

3. Injection moulding method according to claim 1, characterised in that said mould is maintained at a temperature of between 100 and 200° C, preferably between 150 and 160° C.

4. Injection moulding method according to one of the preceding claims, characterised in that said bulk mould compound (BMC) is injected into said mould by at least two injectors (7, 8).

5. Part formed from composite moulded plastics material comprising reinforcing fibres distributed in a matrix comprising a coating made from a bulk mould compound (BMC), characterised in that it comprises a framework (11), formed from a sheet mould compound (SMC) and compressed by injecting the bulk mould compound around said framework and thermosetting this compound.

6. Apparatus for injection moulding a part formed from composite material comprising reinforcing fibres distributed in a resin, said apparatus comprising a mould (5, 6), at least one injector (7, 8) for injecting bulk mould compound (BMC) and at least one opening means (3, 4) for opening said mould, during each moulding operation, said opening being sufficient to permit a framework (11) to be introduced into said mould, characterised in that it comprises at least one reel (20) of sheet mould compound (SMC) disposed close to said mould, said framework being able to be introduced into said mould after having been removed from said reel, and in that said mould comprises at least one element (12, 13, 14, 15) for maintaining said framework in position during the injection of bulk mould compound.

7. Injection moulding apparatus according to claim 6, characterised in that it also comprises an automated means of fitting a framework (11), formed from sheet mould compound (SMC), into said mould when said opening means (3, 4) maintains said mould in the open position.

8. Injection moulding apparatus according to claim 7, characterised in that said fitting means is a multi-axis robot.

9. Injection moulding apparatus according to any one of claims 6 to 8, characterised in that said reel (20) essentially comprises a roll (21) of sheet mould compound (SMC), in front of which is disposed a cutting table (23).

10. Injection moulding apparatus according to any one of claims 6 to 9, characterised in that it comprises two injectors (7, 8), the discharge apertures of which, for discharging into the mould (5, 6), are distributed over the surface of said mould.
